# FASCICULE DE BREVET EUROPEEN

(11) **EP 3 535 546 B1**
(45) Date de publication et mention de la délivrance du brevet: **11.06.2025**
(21) Numéro de dépôt: 17797117.3
(22) Date de dépôt: 02.11.2017
(51) Int. Cl.: G01C 21/32

(54) **PROCÉDÉ D`ÉLABORATION D`UNE CARTE D`AUTONOMIE DE NAVIGATION POUR UN VÉHICULE**
VERFAHREN ZUR ERSTELLUNG EINER AUTONOMEN NAVIGATIONSKARTE FÜR EIN FAHRZEUG
METHOD FOR PRODUCING AN AUTONOMOUS NAVIGATION MAP FOR A VEHICLE

(30) Priorité: 02.11.2016 FR 1660599
(43) Date de publication de la demande: 11.09.2019
(73) Titulaire: Safran Electronics & Defense, 92100 Boulogne-Billancourt (FR); Valeo Schalter und Sensoren GmbH, 74321 Bietigheim-Bissingen (DE)
(72) Inventeur: ROBERT, Emmanuel, 92100 Boulogne-Billancourt (FR); YELLOZ, Jacques, 92100 Boulogne-Billancourt (FR); GOUGEON, Philippe, 94000 Creteil (FR)
(74) Mandataire: Cabinet Boettcher
(86) Numéro de dépôt international: PCT/EP2017/078101
(87) Numéro de publication internationale: WO 2018/083200

(56) Documents cités:
- WO-A1-2014/139821

## Description

La présente invention concerne un procédé d'élaboration d'une carte d'autonomie de navigation pour un véhicule, la carte d'autonomie obtenue et une application de cette carte à la détermination d'un trajet.

### ARRIÈRE-PLAN DE L'INVENTION

Les véhicules classiques sont aujourd'hui très largement pourvus d'un système de navigation comprenant des données cartographiques et mettant en œuvre un algorithme de planification d'itinéraire exploitant ces données. Ces systèmes, couramment appelés GPS (abréviation de l'anglais Global Positioning System) ne sont cependant pas conçus pour autoriser à eux-seuls un fonctionnement du véhicule sans conducteur.

Or, on sait que d'importants travaux sont menés dans le but de permettre une navigation routière autonome, c'est-à-dire sans l'intervention d'un pilote, des véhicules circulant sur le réseau routier.

L'apparition des fonctions d'autonomie dans les véhicules pose le problème du risque de défaillance de ces fonctions et de leurs conséquences. Ces fonctions ne fournissent des solutions de navigation/pilotage du véhicule que si toutes les informations extérieures nécessaires sont présentes et bien traitées par le système à bord. Sinon elles sont soit en échec et le pilote doit reprendre la main, soit en erreur, et la reprise en main par le pilote est encore plus délicate.

Il existe actuellement différents moyens pour assurer une fonction d'autonomie de navigation d'un véhicule ou tout au moins participer à cette fonction d'autonomie. Les principales techniques existantes à ce jour sont connues sous le nom de : GPS (déjà évoqué plus haut) ; LIDAR, acronyme de Light Detection And Ranging, ou LADAR, acronyme de Laser Detection And Ranging ; INS, abrégé de l'expression anglaise Inertial Navigation System, ou en français CIN pour Centrale Inertielle de Navigation ; les techniques utilisant la détection de marquage au sol ; les techniques exploitant l'émission de signaux dédiés par des émetteurs disposés dans les équipements de l'infrastructure routière, notamment les feux de circulation.

WO 2014/139821 A1 divulgue qu'un indice final d'autonomie (PA) est calculé à partir d'une simple somme des indices primaires d'autonomie calculés pour chaque tronçon de trajet selon au moins deux fonctions d'autonomie de navigation distinctes.

Aucune de ces techniques n'est satisfaisante pour couvrir à elle seule l'ensemble d'un réseau routier.

### OBJET DE L'INVENTION

Un but de l'invention et de proposer un procédé d'élaboration d'une carte d'autonomie de navigation pour un véhicule, qui soit fiable sur la totalité des tronçons de trajet sur une zone donnée.

### RESUME DE L'INVENTION

En vue de la réalisation de ce but, on propose selon l'invention un procédé d'élaboration d'une carte d'autonomie de navigation pour un véhicule autonome, selon la revendication 1.

Ainsi, en choisissant des fonctions d'autonomie complémentaires adaptées à la configuration de la zone considérée, on obtient pour chaque tronçon de trajet un indice final d'autonomie présentant une fiabilité améliorée par rapport à une technique existante. La carte d'autonomie regroupe de la sorte des données cartographiques particulières telles que les indices d'autonomie qui vont permettre d'augmenter la sécurité des véhicules autonomes par exemple en permettant de planifier des trajets dont les tronçons sont affectés des indices d'autonomie les plus favorables à l'autonomie.

Selon une version avantageuse de l'invention, l'indice final d'autonomie est calculé en effectuant une moyenne pondérée des indices primaires d'autonomie et le procédé comprend les étapes : d'effectuer plusieurs calculs de chaque indice final avec des coefficients de pondération distincts ; de comparer les indices finaux d'autonomie obtenus ; et d'élaborer la carte d'autonomie de navigation en retenant la pondération pour laquelle l'indice final le plus faible est le plus fort des indices finaux les plus faibles des différentes pondérations.

Ainsi, on améliore encore la précision de la carte d'autonomie de navigation obtenue.

Selon une autre version avantageuse de l'invention, le procédé comprend les étapes: d'effectuer plusieurs calculs de chaque indice final avec des coefficients de pondération distincts; de comparer les indices finaux d'autonomie obtenus ; et d'élaborer la carte d'autonomie de navigation en retenant pour chaque tronçon de trajet l'indice final d'autonomie le plus élevé.

Selon un autre aspect de l'invention, le procédé comprend les étapes: d'identifier des tronçons de trajet pour lesquels les indices finaux d'autonomie sont inférieurs à un seuil prédéterminé, et d'effectuer un lissage aux tronçons de trajet immédiatement adjacents. De préférence, le procédé comprend l'étape préalable d'analyser la configuration des tronçons de trajet et de mettre en place des équipements adaptés à améliorer les indices primaires d'autonomie.

L'invention concerne également : une carte d'autonomie de navigation pour un véhicule autonome sur une zone comprenant des tronçons de trajet, dans laquelle, pour chaque tronçon de trajet, la carte comporte un indice final d'autonomie obtenu en effectuant une moyenne pondérée d'indices primaires d'autonomie selon au moins deux fonctions d'autonomie distinctes ; et une application de cette carte d'autonomie à la détermination d'un trajet obtenu en ajoutant des paramètres d'autonomie aux différents paramètres (rapidité, existence de péages...) qui sont actuellement utilisés pour déterminer un trajet.

### BRÈVE DESCRIPTION DES DESSINS

D'autres caractéristiques et avantages de l'invention apparaîtront encore à la lecture de la description qui suit d'un mode de réalisation préféré non limitatif de l'invention en référence aux figures ci-jointes parmi lesquelles:

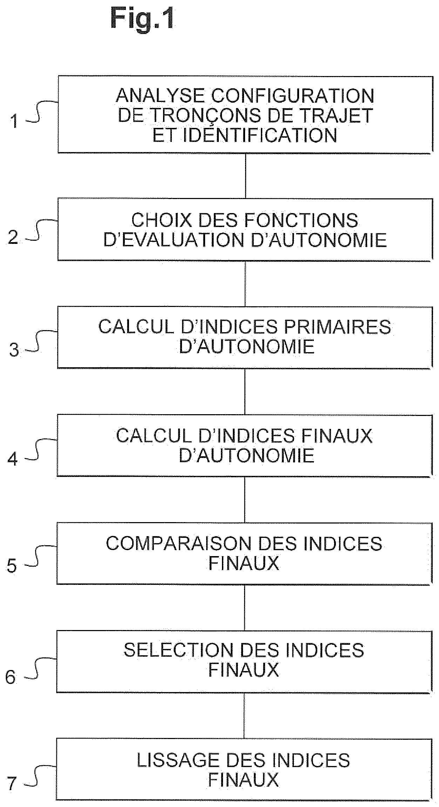

- La figure 1 est un diagramme par blocs du procédé selon l'invention,
- La figure 2 est une carte comportant des indices primaires calculés pour une première fonction d'autonomie,
- La figure 3 est une carte comportant des indices primaires calculés pour une deuxième fonction d'autonomie,
- La figure 4 est une carte comportant des indices primaires calculés pour une troisième fonction d'autonomie,
- La figure 5 est une carte comportant des indices finaux, calculés à partir des indices primaires des figures précédentes.

### DESCRIPTION DETAILLÉE DE L'INVENTION

En référence aux figures, le procédé illustré comporte une première étape 1 d'analyse de la configuration des tronçons de trajet, suivi d'un choix 2 des fonctions d'autonomie. Par exemple, pour une ville de structure très fermée, comportant des immeubles très serrés, et fortement équipée en marquages au sol et en émetteurs dédiés disposés dans des équipements de la ville on choisira les paramètres de reconnaissance correspondants, tandis que sur une route en rase campagne on choisira la fonction d'autonomie GPS.

On effectue ensuite le calcul 3 des indices primaires d'autonomie, suivi du calcul 4 des indices finaux en effectuant une moyenne pondérée des indices primaires. Les coefficients de pondération correspondent à l'importance relative de chaque indice primaire pour l'autonomie du véhicule (par exemple, dans un tronçon donné, le fait d'avoir un marquage au sol précis et une cartographie de haute définition peuvent être plus importants que le fait d'avoir en ligne de vue un point de référence visuel). Les coefficients de pondération peuvent être déterminés a priori ou être mis à jour périodiquement ou en temps réel selon des conditions de circulation (évènement climatique comme le brouillard, présence d'un accident ou de travaux). La moyenne pondérée peut être une moyenne pondérée sous contrainte (dans ce cas, on considère que lorsque l'indice primaire est inférieur à une valeur X, le coefficient qui lui est associé vaut 0, tandis que lorsque l'indice primaire est supérieur à la valeur X, le coefficient vaut 1). Par exemple, en imaginant que la loi interdise la circulation autonome lorsque le marquage est effacé, l'utilisation de la moyenne pondérée sous contrainte permettrait de rendre le critère relatif au marquage au sol prépondérant sur les autres lorsque le marquage au sol est absent.

Si les indices finaux obtenus n'apparaissent pas suffisamment fiables, on réalise de préférence un nouveau calcul des indices finaux avec une pondération différente, suivi d'une comparaison 5 et d'une sélection 6, suivie le cas échéant d'un lissage 7 par exemple en utilisant une centrale inertielle de navigation.

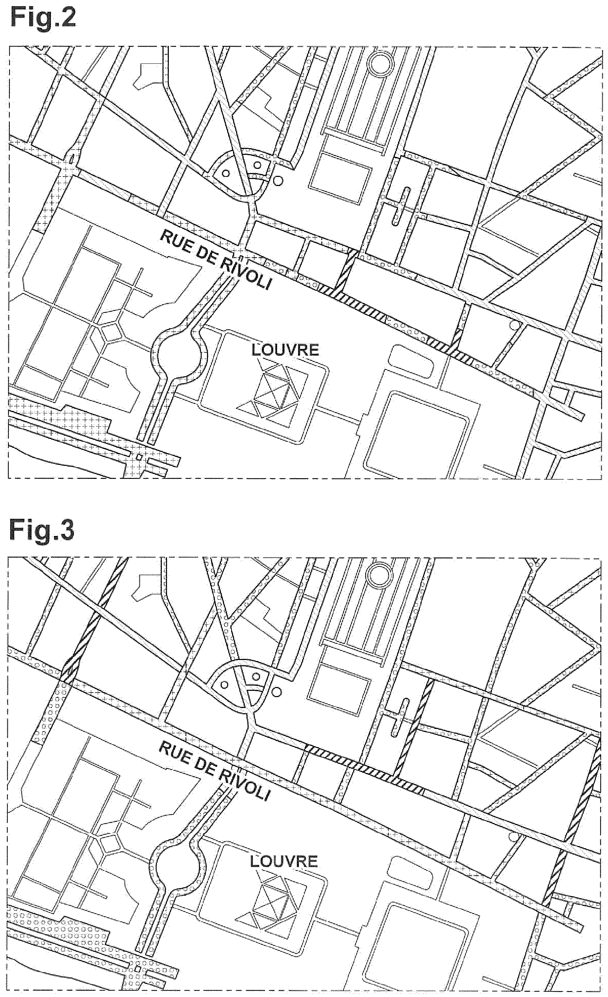

La figure 2 illustre le résultat d'un calcul des indices primaires sur un quartier de Paris en utilisant la fonction d'autonomie GPS. La valeur de l'indice primaire est illustrée pour quatre valeurs décroissantes par les signes suivants : signe +, hachures fines, hachures épaisses, petits ronds.

La figure 3 illustre le résultat d'un calcul avec la fonction d'autonomie LIDAR, en utilisant les mêmes signes pour la représentation des indices obtenus.

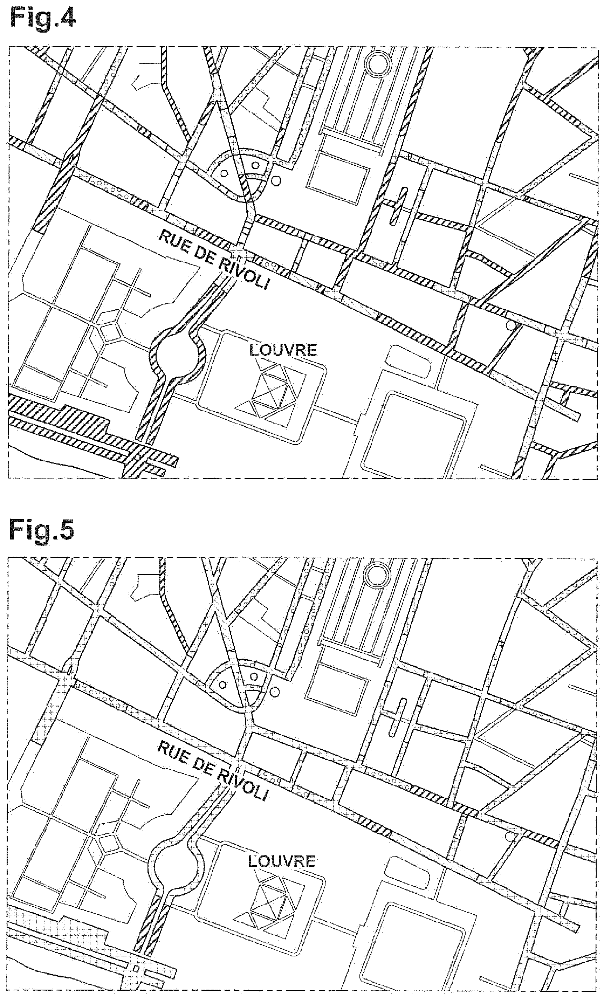

La figure 4 illustre le résultat d'un calcul avec la fonction d'autonomie marquage au sol, toujours en utilisant les mêmes signes.

La figure 5 illustre le résultat d'un calcul de moyenne pondérée à partir des trois précédents. On remarque que la qualité de l'indice GPS sur une partie de la rue de Rivoli est partiellement détériorée par les autres fonctions d'autonomie. Une correction pourra toutefois être effectuée avec une fonction d'autonomie CIN. On notera à ce propos que la qualité de l'indice dépend de la qualité des composants utilisés. En particulier, une CIN de bonne qualité permettrait de faire passer tous les tronçons de trajet à la valeur supérieure. La qualité des composants alliée au procédé de l'invention permettra donc de faire la distinction entre les véhicules véritablement équipés pour la navigation autonome, et ceux qui ne sont autonomes que dans des circonstances déterminées.

Le véhicule autonome permettant la mise en œuvre du procédé de l'invention comporte une unité de pilotage automatique et une unité de navigation. L'unité de pilotage automatique est reliée aux organes de commande du véhicule comme le système de direction, le moteur, le système de freinage, ainsi qu'à des capteurs de détection du comportement du véhicule et de l'environnement du véhicule, et incorpore des moyens de calcul permettant de piloter les organes de commande à partir des informations fournies par les capteurs de manière que le véhicule reste sur une trajectoire déterminée en respectant la règlementation routière. L'unité de navigation comprend par exemple un module GPS et un module de planification d'itinéraires à partir de données cartographiques comprenant la carte d'autonomie. La carte d'autonomie est exploitée à la fois par l'unité de navigation pour déterminer un itinéraire selon l'indice des tronçons empruntés et par l'unité de pilotage qui va déterminer, selon le tronçon emprunté, quels capteurs elle va privilégier (par exemple, dans une zone dans laquelle la réception des signaux GPS est de mauvaise qualité, l'information GPS sera négligée pour le pilotage du véhicule de manière à limiter le risque que la prise en compte de cette information ne vienne altérer la précision de pilotage autonome).

Les cartes d'autonomie peuvent être avantageusement utilisées par un organisme assurant la gestion du réseau routier pour identifier les tronçons de son réseau qu'il faut améliorer pour la circulation des véhicules autonomes (en refaisant la signalisation au sol, en disposant des balises RFID permettant une information des véhicules autonomes...).

Les cartes d'autonomie peuvent être avantageusement utilisées par les constructeurs automobiles pour leur permettre de déterminer sur quelle part du réseau leurs véhicules peuvent fonctionner de manière autonome et d'améliorer leurs véhicules en les aidant à identifier quels capteurs doivent équiper les véhicules autonomes pour permettre leur circulation autonome sur une plus grande part du réseau.

Bien entendu l'invention n'est pas limitée au mode de réalisation décrit et on peut y apporter des variantes de réalisation sans sortir du cadre de l'invention telle que définie par les revendications.

En particulier, on comprend que l'autonomie d'un véhicule dépend des capteurs présents sur le véhicule. Par conséquent, on élaborera une carte d'autonomie par modèle, voire version, d'un véhicule. Il sera également envisageable de fournir, à des organismes assurant la gestion du réseau routier à l'échelon local ou national, des cartes « globales » d'autonomie correspondant à plusieurs types ou modèles de véhicules autonomes. Par exemple, on pourrait établir une carte « minimale » d'autonomie basée sur l'équipement minimal des véhicules autonomes et une carte « maximale » d'autonomie basée sur l'équipement maximal des véhicules autonomes.

## Revendications

1. Procédé d'élaboration d'une carte d'autonomie de navigation pour un véhicule autonome équipé d'au moins deux capteurs fournissant chacun une fonction d'autonomie de navigation distincte, sur une zone comportant des tronçons de trajet, comportant les étapes : d'identifier (1) les tronçons de trajet pour lesquels la carte doit être élaborée; pour chaque tronçon de trajet, de calculer (3) un indice primaire d'autonomie pour chacune des fonctions d'autonomie de navigation; et de calculer (4) pour chaque tronçon de trajet un indice final d'autonomie à partir des indices primaires d'autonomie, **caractérisé en ce que** l'indice final d'autonomie est calculé en effectuant une moyenne pondérée des indices primaires d'autonomie selon une importance relative de chaque indice primaire pour l'autonomie de navigation du véhicule.

2. Procédé selon la revendication 1, comprenant les étapes:
d'effectuer plusieurs calculs (4) de chaque indice final avec des coefficients de pondération distincts; de comparer (5) les indices finaux d'autonomie obtenus ; et
d'élaborer (6) la carte d'autonomie de navigation en retenant la pondération pour laquelle l'indice final le plus faible est le plus fort des indices finaux les plus faibles des différentes pondérations.

3. Procédé selon la revendication 1, comprenant les étapes :
d'effectuer plusieurs calculs (4) de chaque indice final avec des coefficients de pondération distincts ; de comparer (5) les indices finaux d'autonomie obtenus ; et
élaborer la carte d'autonomie de navigation en retenant pour chaque tronçon de trajet l'indice final d'autonomie le plus élevé.

4. Procédé selon la revendication 1, **caractérisé en ce qu'**il comprend les étapes d'identifier des tronçons de trajet pour lesquels les indices finaux d'autonomie sont inférieurs à un seuil prédéterminé, et d'effectuer une opération de lissage (7) appliquée aux tronçons de trajet immédiatement adjacents.

5. Procédé selon la revendication 1, **caractérisé en ce qu'**il comprend l'étape préalable d'analyser (1) la configuration des tronçons de trajet et de mettre en place des équipements adaptés à améliorer les indices primaires d'autonomie.

6. Carte d'autonomie de navigation, issue du procédé selon la revendication 1, pour un véhicule autonome sur une zone comprenant des tronçons de trajet, **caractérisée en ce que**, pour chaque tronçon de trajet, elle comporte un indice final d'autonomie en effectuant une moyenne pondérée d'indices primaires d'autonomie selon au moins deux fonctions d'autonomie distinctes qui sont chacune fournies par un capteur du véhicule.

7. Application d'une carte d'autonomie selon la revendication 6 à la détermination d'un trajet, **caractérisée en ce qu'**à des paramètres géographiques de détermination du trajet, il est ajouté des paramètres d'autonomie.

8. Véhicule autonome comportant une unité de pilotage automatique et une unité de navigation ; l'unité de pilotage automatique étant reliée à des organes de commande du véhicule ainsi qu'à des capteurs de détection du comportement du véhicule et de l'environnement du véhicule, et incorporant des moyens de calcul permettant de piloter les organes de commande à partir des informations fournies par les capteurs de manière que le véhicule reste sur une trajectoire déterminée en respectant des règles de circulation ; l'unité de navigation comprenant un module de planification d'itinéraires à partir de données cartographiques comprenant une carte d'autonomie selon la revendication 6, la carte d'autonomie étant exploitée à la fois par l'unité de navigation pour déterminer un itinéraire en fonction de l'indice final d'autonomie des tronçons empruntés et par l'unité de pilotage pour déterminer, selon le tronçon emprunté, quels capteurs elle va privilégier.

## Patentansprüche

1. Verfahren zur Erstellung einer Karte für die autonome Navigation eines autonomen Fahrzeugs, das mit zumindest zwei Sensoren ausgestattet ist, die jeweils eine separate Funktion zur autonomen Navigation in einer Zone mit Streckenabschnitten bereitstellen, wobei das Verfahren die folgenden Schritte enthält: das Identifizieren (1) jener Streckenabschnitte, für welche die Karte erstellt werden soll; das für jeden Streckenabschnitt erfolgende Berechnen (3) eines primären Autonomiekennwerts für jede der Funktionen zur autonomen Navigation; und das für jeden Streckenabschnitt erfolgende Berechnen (4) eines finalen Autonomiekennwerts aus den primären Autonomiekennwerten, **dadurch gekennzeichnet, dass** der finale Autonomiekennwert berechnet wird, indem aus den primären Autonomiekennwerten gemäß einer relativen Bedeutung jedes primären Kennwerts ein gewogener Mittelwert für die autonome Navigation des Fahrzeugs gewonnen wird.

2. Verfahren nach Anspruch 1, umfassend die folgenden Schritte: das Durchführen mehrerer Berechnungen (4) jedes finalen Kennwerts mit separaten Gewichtungsfaktoren; das Vergleichen (5) der gewonnenen finalen Autonomiekennwerte; und das Erstellen (6) der Karte für die autonome Navigation, indem jeweils jene Gewichtung gewählt wird, bei welcher der niedrigste finale Kennwert der ausgeprägteste unter den niedrigsten finalen Kennwerten für die verschiedenen Gewichtungen ist.

3. Verfahren nach Anspruch 1, umfassend die folgenden Schritte: das Durchführen mehrerer Berechnungen (4) jedes finalen Kennwerts mit separaten Gewichtungsfaktoren; das Vergleichen (5) der gewonnenen finalen Autonomiekennwerte; und das Erstellen der Karte für die autonome Navigation, indem für jeden Streckenabschnitt der höchste finale Autonomiekennwert gewählt wird.

4. Verfahren nach Anspruch 1, **dadurch gekennzeichnet, dass** es die folgenden Schritte umfasst: das Identifizieren jener Streckenabschnitte, in welchen die finalen Autonomiekennwerte unter einem vorbestimmten Schwellenwert liegen, und das Durchführen eines Glättungsvorgangs (7), der auf die unmittelbar benachbarten Streckenabschnitte angewendet wird.

5. Verfahren nach Anspruch 1, **dadurch gekennzeichnet, dass** es den Vorbereitungsschritt umfasst, die Beschaffenheit der Streckenabschnitte zu analysieren (1) und Einrichtungen einzusetzen, die dafür angepasst sind, die primären Autonomiekennwerte zu verbessern.

6. Karte für die autonome Navigation eines autonomen Fahrzeugs in einer Zone mit Streckenabschnitten, welche gemäß dem Verfahren nach Anspruch 1 erstellt worden ist, **dadurch gekennzeichnet, dass** sie für jeden Streckenabschnitt einen finalen Autonomiekennwert enthält, welcher gewonnen wird, indem ein gewogener Mittelwert aus primären Autonomiekennwerten basierend auf zumindest zwei separaten Autonomiefunktionen ermittelt wird, die jeweils durch einen Fahrzeugsensor bereitgestellt werden.

7. Anwendung einer Karte für die autonome Navigation nach Anspruch 6 auf die Bestimmung einer Strecke, **dadurch gekennzeichnet, dass** den geografischen Parametern zur Streckenbestimmung Autonomieparameter hinzugefügt werden.

8. Autonomes Fahrzeug mit einer Autopiloteinheit und einer Navigationseinheit, wobei die Autopiloteinheit mit Bedienelementen des Fahrzeugs sowie mit Sensoren zur Erfassung des Fahrzeugverhaltens und der Fahrzeugumgebung verbunden ist und Berechnungsmittel aufweist, die dazu dienen, die Bedienorgane anhand der von den Sensoren bereitgestellten Informationen derart anzusteuern, dass das Fahrzeug unter Beachtung der Verkehrsvorschriften auf einem vorbestimmten Streckenverlauf bleibt; wobei die Navigationseinheit ein Modul zur Planung von Routen anhand von Kartendaten aufweist, die eine Karte für die autonome Navigation nach Anspruch 6 umfassen, wobei die Karte für die autonome Navigation doppelt ausgewertet wird, und zwar sowohl von der Navigationseinheit zur Bestimmung einer Route basierend auf dem finalen Autonomiekennwert des jeweils befahrenen Streckenabschnitts, als auch von der Autopiloteinheit zur Bestimmung der je nach befahrenem Streckenabschnitt bevorzugt zu verwendenden Sensoren.

## Claims

1. A method of preparing a navigation autonomy map for a autonomous vehicle equipped with at least two sensors each providing a distinct navigation autonomy function, covering a zone including path segments, the method comprising the following steps: identifying (1) the path segments for which the map needs to be prepared; for each path segment, calculating (3) primary autonomy indices for each of navigation autonomy function; and calculating (4) for each path segment a final autonomy index on the basis of the primary autonomy indices, **characterized in that** the final autonomy index is calculated by taking a weighted average of the primary autonomy indices according to a relative importance of each primary autonomy index for the navigation autonomy of the vehicle.

2. A method according to claim 1, including the following steps: performing a plurality of calculations (4) for each final index with distinct weighting coefficients; comparing (5) the resulting final autonomy indices; and preparing (6) the navigation autonomy map by retaining the weighting for which the lowest final index is the highest of the lowest final indices of the various weightings.

3. A method according to claim 1, including the following steps: performing a plurality of calculations (4) for each final index with distinct weighting coefficients; comparing (5) the resulting final autonomy indices; and preparing the navigation autonomy map by retaining the highest final autonomy index for each path segment.

4. A method according to claim 1, **characterized in that** it includes the steps of identifying path segments for which the final autonomy indices are less than a predetermined threshold, and of performing a smoothing operation (7) applied to the immediately adjacent path segments.

5. A method according to claim 1, **characterized in that** it includes a prior step of analyzing (1) the configuration of the path segments and of installing equipment adapted to improve the primary autonomy indices.

6. A navigation autonomy map, resulting from the method according to claim 1, for a vehicle covering a zone comprising path segments, the map being **characterized in that** for each path segment it includes a final autonomy index obtained by taking a weighted mean of primary autonomy indices in accordance with at least two distinct autonomy functions.

7. The application of an autonomy map according to claim 6 for determining a path, **characterized in that** autonomy parameters are added to geographical parameters for determining the path.

8. An autonomous vehicle including an automatic driver unit and a navigation unit; the automatic driver unit being connected to vehicle control members and to sensors for detecting the behavior of the vehicle and the surroundings of the vehicle, and incorporating calculation means enabling the control members to be driven on the information supplied by the sensors so that the vehicle remains on a determined path in compliance with traffic regulations; the navigation unit comprising a module for planning itineraries on the basis of map data comprising an autonomy map according to claim 6, the autonomy map being used both by the navigation unit to determine an itinerary as a function of the indices of the segments traveled, and also by the driver unit to determine which sensors should be given precedence on the basis of the segment traveled.
